# EUROPEAN PATENT SPECIFICATION

(11) **EP 3 961 453 B1**
(45) Date of publication and mention of the grant of the patent: **30.08.2023**
(21) Application number: 21181981.8
(22) Date of filing: 28.06.2021
(51) Int. Cl.: H04L 9/00, H04L 9/40, H04L 9/32, G06F 21/64, G06F 21/60

(54) **METHOD AND APPARATUS FOR INVOKING SMART CONTRACT, ELECTRONIC DEVICE, AND STORAGE MEDIUM**
VERFAHREN UND VORRICHTUNG ZUM AUFRUFEN EINES INTELLIGENTEN VERTRAGS, ELEKTRONISCHE VORRICHTUNG UND SPEICHERMEDIUM
PROCÉDÉ ET APPAREIL D'INVOCATION D'UN CONTRAT INTELLIGENT, DISPOSITIF ÉLECTRONIQUE ET SUPPORT D'ENREGISTREMENT

(30) Priority: 31.08.2020 CN 202010901426
(43) Date of publication of application: 02.03.2022
(73) Proprietor: Alipay (Hangzhou) Information Technology Co., Ltd., Hangzhou, Zhejiang 310000 (CN)
(72) Inventor: WEI, Changzheng, Hangzhou, Zhejiang, 310000 (CN); LIU, Yan, Hangzhou, Zhejiang, 310000 (CN); LI, Yongqiang, Hangzhou, Zhejiang, 310000 (CN)
(74) Representative: Goddar, Heinz J.

(56) References cited:
- CN-A- 110 060 189
- CN-A- 110 363 541
- CN-A- 110 380 860

## Description

### TECHNICAL FIELD

One or more implementations of the present specification relate to the field of blockchain technologies, and in particular, to a method and apparatus for invoking a smart contract, an electronic device, and a storage medium.

### BACKGROUND

Blockchain technology (also known as distributed ledger technology) is a decentralized distributed database technology with various features such as being decentralized, open and transparent, tamper-resistant, and trustworthy, and is applicable to many application scenarios with high demands for data reliability.
CN 110 060 189 A relates to a public benefit donation method and device based on blockchain and electronic equipment.
CN 110 380 860 A relates to a shared resource data processing method and device based on blockchain smart contract.

### SUMMARY

The invention is defined in the independent claims 1 and 10. Advantageous modifications are set forth in the dependent claims.

In view of this, one or more implementations of the present specification provide a method and apparatus for invoking a smart contract, an electronic device, and a storage medium.

To achieve the previous objective, one or more implementations of the present specification provide the following technical solutions:
According to a first aspect of one or more implementations of the present specification, a method for invoking a smart contract is provided and applied in a blockchain node; and the method includes: separately obtaining a plurality of blockchain transactions, the plurality of blockchain transactions each being used to invoke a target smart contract; determining whether invoking operation information of the plurality of blockchain transactions meets an invoking threshold for the target smart contract; and in response to the invoking operation information meeting the invoking threshold, executing a contract code corresponding to the target smart contract.

According to a second aspect of one or more implementations of the present specification, a method for invoking a smart contract is provided and applied in a blockchain node; and the method includes: determining invoking operation information of a currently received blockchain transaction for invoking a target smart contract, and updating cumulative invoking information for the target smart contract according to the invoking operation information; in response to updated cumulative invoking information meeting at least one intermediate invoking threshold for the target smart contract, continuing to obtain a subsequent blockchain transaction for invoking the target smart contract; and in response to the updated cumulative invoking information meeting a final invoking threshold for the target smart contract, executing a contract code corresponding to the target smart contract.

According to a third aspect of one or more implementations of the present specification, an apparatus for invoking a smart contract is provided and applied in a blockchain node; and the apparatus includes: an acquisition unit, configured to separately obtain a plurality of blockchain transactions, the plurality of blockchain transactions each being used to invoke a target smart contract; a determining unit, configured to determine whether invoking operation information of the plurality of blockchain transactions meets an invoking threshold for the target smart contract; and an execution unit, configured to: in response to the invoking operation information meeting the invoking threshold, execute a contract code corresponding to the target smart contract.

According to a fourth aspect of one or more implementations of the present specification, an apparatus for invoking a smart contract is provided and applied in a blockchain node; and the apparatus includes: a determining unit, configured to: determine invoking operation information of a currently received blockchain transaction for invoking a target smart contract, and update cumulative invoking information for the target smart contract according to the invoking operation information; a circulation unit, configured to: in response to updated cumulative invoking information meeting at least one intermediate invoking threshold for the target smart contract, continue to obtain a subsequent blockchain transaction for invoking the target smart contract; and an execution unit, configured to: in response to the updated cumulative invoking information meeting a final invoking threshold for the target smart contract, execute a contract code corresponding to the target smart contract.

According to a fifth aspect of one or more implementations of the present specification, an electronic device is provided, including: a processor; and a memory configured to store an executable instruction of the processor; the processor implementing the method according to the first aspect or the second aspect by running the executable instruction.

According to a sixth aspect of one or more implementations of the present specification, a computer readable storage medium storing a computer instruction is provided, where when being executed by a processor, the instruction implements the steps of the method according to the first aspect or the second aspect.

### BRIEF DESCRIPTION OF DRAWINGS

FIG. 1 is a schematic diagram of creating a smart contract according to an example implementation.
FIG. 2 is a schematic diagram of invoking a smart contract according to an example implementation.
FIG. 3 is a flowchart illustrating a method for invoking a smart contract according to an example implementation.
FIG. 4 is a flowchart illustrating another method for invoking a smart contract according to an example implementation.
FIG. 5 is a flowchart illustrating a multi-party security computing method based on a smart contract according to an example implementation.
FIG. 6 is a flowchart illustrating a contract signing method based on a smart contract according to an example implementation.
FIG. 7 is a flowchart illustrating a crowdfunding donation method based on a smart contract according to an example implementation.
FIG. 8 is a schematic structural diagram illustrating a device, according to an example implementation.
FIG. 9 is a block diagram illustrating an apparatus for invoking a smart contract according to an example implementation.
FIG. 10 is a block diagram illustrating another apparatus for invoking a smart contract according to an example implementation.

### DESCRIPTION OF IMPLEMENTATIONS

Example implementations are described in detail herein, and examples of the example implementations are presented in the accompanying drawings. When the following descriptions relate to the accompanying drawings, unless specified otherwise, same numbers in different accompanying drawings represent same or similar elements. Implementations described in the following example implementations do not represent all implementations consistent with one or more implementations of the present specification. On the contrary, the implementations are merely examples of apparatuses and methods that are described in the appended claims in details and consistent with some aspects of one or more implementations of the present specification.

It should be noted that, in other implementations, steps of a corresponding method are not necessarily performed according to a sequence shown and described in the present specification. In some other implementations, the method can include more or fewer steps than those described in the present specification. In addition, individual steps described in the present specification can be broken down into multiple steps in other implementations for description. However, the multiple steps described in the present specification can also be combined into a single step for description in other implementations.

A blockchain network is generally classified into three types: a public blockchain, a private blockchain, and a consortium blockchain. In addition, there are several types of combinations, such as private blockchain + consortium blockchain and consortium blockchain + public blockchain. The public blockchain has the highest degree of de-centralization. Representative public blockchains include Bitcoin and Ethereum. Participants who join the public blockchain can read on-chain data records, participate in transactions, and compete for accounting rights of new blocks. Furthermore, each participant (i.e., node) can freely join and exit the network and perform related operations. Conversely, a write right of the private blockchain network is controlled by a certain organization or institution, and a data reading right is specified by the organization. In short, the private blockchain can be a weak centralization system, have a relatively smaller number of participant nodes, and stricter limitations on participating nodes. This type of blockchain is more suitable for internal use within a specific organization. The consortium blockchain is a blockchain balanced between the public blockchain and the private blockchain, and can be "partially decentralized." Each node in the consortium blockchain usually has a corresponding entity institution or organization. Participants join the network through authorization and form interest-related consortiums to jointly maintain blockchain operation.

All of the public blockchain, the private blockchain, and the consortium blockchain can provide functions of a smart contract. The smart contract on the blockchain is a contract that can be triggered by a transaction on the blockchain system. The smart contract is defined in the form of codes.

Taking an account model (for example, Ethereum) as an example, a blockchain account can include an external account, a contract account, etc. The external account is usually owned by a user (an individual or an institution), while the contract account corresponds to the smart contract deployed in the blockchain. The structures of various accounts are similar, and can include fields such as Balance, Nonce, Code, and Storage. The Balance field is used to maintain the current account balance; the Nonce field is used to maintain the number of transactions of the account, and is a counter used to ensure that each transaction can be processed only once, effectively avoiding replay attacks; the Code field is used to maintain the contract code of the account (therefore, the Code field of the external account is usually null); in practice, the Code field usually maintains only the hash value of the contract code; therefore, the Code field is also commonly referred to as a Codehash field; and the Storage field is used to maintain the storage content of the account (the default field value is null). For the contract account, an independent storage space is usually allocated to store the content of the contract account. The independent storage space is commonly referred to as the account storage of the contract account. The storage content of the contract account usually constructs a data structure of a Merkle Patricia Trie (MPT) tree and is stored in the above-mentioned independent storage space. An MPT tree constructed based on the storage content of the contract account is usually referred to as a Storage tree. The Storage field usually maintains only the root node of the Storage tree. Therefore, the Storage field is also commonly referred to as a StorageRoot field.

For example, Ethereum allows the user to create and invoke complex logic in an Ethereum network, which is the biggest challenge to distinguish Ethereum from bitcoin blockchain technology. An Ethereum virtual machine (EVM) is the core of Ethereum, which is a programmable blockchain, and each Ethereum node can run the EVM. The EVM is a Turing-complete virtual machine, through which various complex logics can be implemented. The user broadcasts and invokes the smart contract actually on the EVM in Ethereum. In fact, the virtual machine directly runs a virtual machine code (virtual machine bytecode, "bytecode" for short). The smart contract has a deployment phase and an invoking phase.

In the deployment phase, the user sends a transaction that includes information about creating a smart contract to Ethereum. The "data" field of the transaction includes a code (such as a bytecode) of the smart contract. The "to" field of the transaction is null. Each node in the Ethereum network performs this transaction by using the EVM, and generates a corresponding contract instance. After consensus is reached among nodes by using a consensus mechanism, the smart contract corresponding to the transaction is successfully created, and a contract account corresponding to the smart contract appears on the blockchain. The contract account has a specific contract address, a contract code (that is, a code of the smart contract), or a hash value of the contract code is stored in the contract account, and the contract code is used to control behavior of the corresponding smart contract.

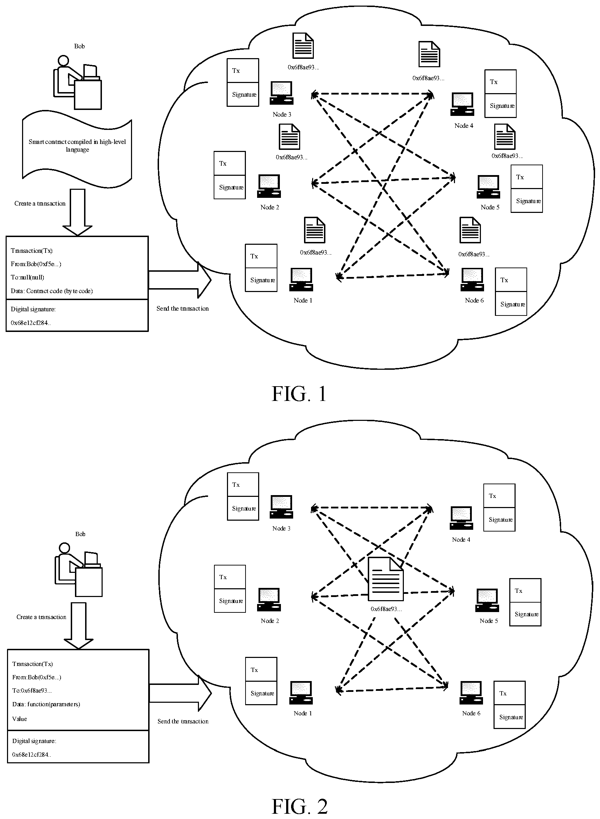

As shown in FIG. 1, after "Bob" sends a transaction containing information about creating a smart contract to an Ethereum network, an EVM of node 1 can execute the transaction and generate a corresponding contract instance. In FIG. 1, "0x6f8ae93..." represents an address of the contract. The "data" field of the transaction can save a bytecode. The "to" field of the transaction is null. After consensus is reached among nodes through a consensus mechanism, the contract is successfully created and can be invoked in a subsequent process. After the contract is created, a contract account corresponding to the smart contract appears on the blockchain and has a specific address, and a contract code is stored in the contract account. The behavior of the smart contract is controlled by the contract code. In other words, the smart contract causes a virtual account including the contract code and account storage to be generated on the blockchain.

In the invoking phase, a user (which can be the same or different from the user deploying the smart contract) sends a transaction used to invoke a smart contract to the Ethereum network, where the "from" field of the transaction is an address of an external account corresponding to the user, the "to" field is a contract address of the smart contract that needs to be invoked, and the "data" field includes a method and input parameter data for invoking the smart contract. After consensus is reached among the nodes by using the consensus mechanism, the invoked smart contract as declared by the transaction is independently executed on each node of the Ethereum network in a specified method, and all execution records and data are stored in the blockchain. Therefore, after the transaction is completed, transaction records that cannot be tampered with and will not get lost are stored in the blockchain.

As shown in FIG. 2, Ethereum is still used as an example. After "Bob" sends a transaction for invoking a smart contract to an Ethereum network, an EVM of a node can execute the transaction and generate a corresponding contract instance. In FIG. 2, the "from" field of the transaction is an address of an account of a transaction initiator (that is, "Bob"), "0x6fBae93..." in the "to" field represents an address of the invoked smart contract, the "value" field is an ETH value in Ethereum, and the "data" field of the transaction stores a method and a parameter for invoking the smart contract.

It can be understood that the smart contract in the related technology is invoked by any one contract invoker by default. However, in an actual application, there can be a need that a blockchain node can be triggered to execute a smart contract only when a plurality of parties jointly invoke the same smart contract. For example, all of the plurality of contract invokers need to invoke the same smart contract and provide input parameter data that meets a certain condition, to trigger the blockchain nodes to execute the smart contract to process the input parameter data provided by the plurality of contract invokers. To this end, the present specification is intended to provide a solution for invoking a smart contract to meet the above need of invoking a same smart contract by a plurality of parties.

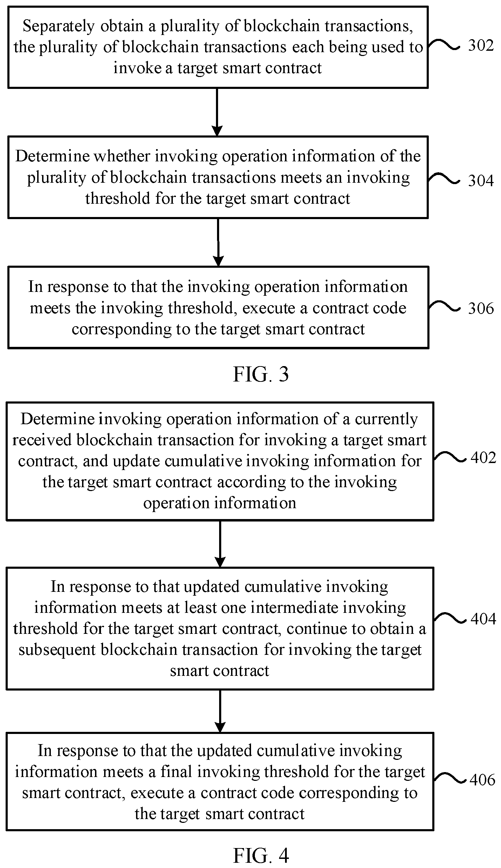

Referring to FIG. 3, FIG. 3 is a flowchart illustrating a method for invoking a smart contract according to an example implementation. As shown in FIG. 3, the method is applied in a blockchain node of a blockchain network and can include the following steps:
Step 302: Separately obtain a plurality of blockchain transactions, the plurality of blockchain transactions each being used to invoke a target smart contract.

In this implementation, a plurality of blockchain transactions jointly invoking the target smart contract to trigger execution of the target smart contract is used as an example for description. Therefore, the obtained plurality of blockchain transactions refer to blockchain transactions used to invoke the target smart contract. It should be noted that, if no special description is provided, blockchain transactions in the following specification refer to blockchain transactions used to invoke the target smart contract.

An invoking threshold can be set for the target smart contract, and the invoking threshold can be understood as a prerequisite for the blockchain node to execute the target smart contract. In other words, when the invoking operation information of the obtained plurality of blockchain transactions meets the invoking threshold, the blockchain nodes can execute the target smart contract in response to the plurality of blockchain transactions.

Because execution of the target smart contract needs to be triggered by a plurality of blockchain transactions being submitted to invoke the target smart contract, when only some of the plurality of blockchain transactions are currently obtained, the obtained blockchain transactions can be temporarily stored, and only when all the blockchain transactions that meet the invoking threshold are obtained (which triggers the execution of the target smart contract), the target smart contract is executed to process the input parameter data included in the plurality of blockchain transactions.

It should be noted that, when a block is published to the end of the blockchain for storing, a blockchain transaction included in the to-be-published block needs to be performed.

Taking Ethereum as an example, the Merkle Patricia Tree (MPT tree) (a variant of the Merkle tree) is used in Ethereum as a data organization form to organize and manage important data such as account state and transaction information. For data to be stored and maintained in the blockchain, Ethereum uses three MPT trees: MPT state tree, MPT transaction tree, and MPT receipt tree.

The MPT state tree is an MPT tree organized by account state data of all accounts in the blockchain. The MPT transaction tree is an MPT tree organized by transaction data in the blockchain. The MPT receipt tree is an MPT tree organized by a transaction receipt corresponding to each transaction generated after the transaction in the block is executed. Hash values of root nodes of the MPT state tree, the MPT transaction tree, and the MPT receipt tree are finally added to block headers of corresponding blocks. Both the MPT transaction tree and the MPT receipt tree are corresponding to blocks, that is, each block has its own MPT transaction tree and MPT receipt tree. The MPT state tree is a global MPT tree, and does not correspond to a specific block, but covers account state data (that is, world state) of all accounts in the blockchain. Organized MPT transaction tree, MPT receipt tree, and MPT state tree are finally stored in a Key-Value type database (for example, LevelDB) that uses a multilevel data storage structure.

It should be noted that, each time a latest block is generated in the blockchain, after a transaction in the latest block is executed, an account state of a related account (which can be an external account or a contract account) of the executed transaction in the blockchain usually changes accordingly, and the world state also changes accordingly. For example, when a "transfer transaction" in a block is executed, balances of transfer-out and transfer-in accounts associated with the "transfer transaction" (for example, field values of the Balance fields of these accounts) usually change accordingly. After the transaction in the latest block generated in the blockchain is executed, because an account state in the current blockchain changes, a node needs to construct an MPT state tree based on current account state data of all accounts in the blockchain, so as to maintain the latest states of all accounts in the blockchain. That is, each time a latest block is generated in the blockchain, after a transaction in the latest block is executed, an account state in the blockchain changes, and the node needs to reconstruct an MPT state tree based on the latest account state data of all accounts in the blockchain. In other words, each block in the blockchain has a corresponding MPT state tree. The MPT state tree maintains the latest account states of all accounts in the blockchain after a transaction in the block is executed.

It can be understood that when blockchain transactions received within a current block generation period (for example, a blocking period) trigger execution of the target smart contract, a block published to the end of the blockchain in the current block generation cycle can include these blockchain transactions. That is, execution of the target smart contract can be triggered only when a plurality of blockchain transactions received in the current block generation period meet the invoking threshold of the target smart contract, that is, the plurality of blockchain transactions can be executed. Otherwise, the plurality of blockchain transactions in the current block generation period cannot be executed by the blockchain node. In this case, when a plurality of blockchain transactions are separately obtained, the plurality of blockchain transactions are separately received in the current block generation period. Certainly, the above limitation on the block generation period may not be set. For example, when the blockchain transactions received in the current block generation period do not trigger execution of the target smart contract, these blockchain transactions can be temporarily stored until execution of the target smart contract is triggered together with a subsequently received blockchain transaction, and all blockchain transactions that jointly trigger execution of the target smart contract are performed by the blockchain node.

The block generation period can be flexibly set according to a consensus algorithm used by the blockchain network. For example, a dynamic change of the block generation period of the blockchain network can be set, or a static change can be set. Consensus algorithms supported in the blockchain can include: a first-type consensus algorithm where a node needs to compete for the bookkeeping right in each round of bookkeeping, such as Proof of Work (POW), Proof of Stake (POS), and Delegated Proof of Stake (DPOS); a second-type consensus algorithm where a bookkeeping node is elected in advance for each round of bookkeeping (there is no need to compete for the bookkeeping right), such as a Practical Byzantine Fault Tolerance (PBFT).

In a blockchain network using the first-type consensus algorithm, all nodes that compete for the bookkeeping right can execute a transaction after receiving the transaction. One of the nodes that compete for the bookkeeping right can prevail in a current round and become the bookkeeping node. The bookkeeping node can assemble a received transaction with other transactions to generate a latest block, and send the generated latest block or a block header of the latest block to other nodes for reaching consensus.

In a blockchain network using the second-type consensus algorithm, a node having the bookkeeping right has been agreed upon before the current round of bookkeeping. Therefore, after receiving a transaction, a node can send the transaction to the bookkeeping node if the node is not the bookkeeping node of the current round. The bookkeeping node in the current round can execute the transaction when or before packaging the transaction with other transactions to generate a latest block. After generating the latest block, the bookkeeping node can send the latest block or a block header of the latest block to other nodes for reaching consensus.

As described above, regardless of which consensus algorithm is used in the blockchain, the bookkeeping node in the current round can assemble the received transactions to generate the latest block, and send the generated latest block or the block header of the latest block to other nodes for consensus verification. After receiving the latest block or the block header of the latest block, if the other nodes verify that the latest block is correct, the other nodes can append the latest block to the end of the original blockchain, so as to complete a bookkeeping process of the blockchain. In the process of verifying a new block or block header from the bookkeeping node, the other nodes can also execute a transaction included in the block.

In this implementation, according to different functions implemented by the target smart contract, the contract invokers that submit blockchain transactions may have various types of identity. For example, the plurality of blockchain transactions can be submitted separately by a same contract invoker or by a plurality of contract invokers. The following description includes application scenarios such as multi-party security computing, contract signing, and crowdfunding donation.

In an implementation, there is a need between individual data providers to aggregate their data for computing. For privacy protection of data, each data provider does not want to share its private data to another data provider, so as to avoid privacy leakage. Therefore, a blockchain network can be used as a third-party trusted platform. Each data provider provides private data to the blockchain network, so the blockchain network performs security computing on all the private data, so each data provider can obtain a computing result obtained by the blockchain network.

For example, a multi-party security computing contract (for example, a target smart contract in a multi-party security computing scenario) can be deployed in the blockchain network. Contract codes of the multi-party security computing contract define a logic for computing private data. Then, each data provider can submit, to the blockchain network, a blockchain transaction used to invoke the multi-party security computing contract, where the submitted blockchain transaction includes private data of the data provider. It can be understood that, in the above application scenario of multi-party security computing, blockchain transactions are submitted by different contract invokers.

In an implementation, a contract initiator can deploy a smart contract in the blockchain network for performing agreement signing, and codes of the smart contract define a logic for signing a target agreement. The target agreement can be recorded in a chain code of the blockchain node, or can be recorded in the codes of the smart contract for signing the target agreement, or can be recorded in a contract account of the smart contract for signing the target agreement. Certainly, the present specification is not limited thereto. Then, an agreement participant of the target agreement can submit, to the blockchain network, a blockchain transaction used to invoke the smart contract for signing the target agreement, where the submitted blockchain transaction includes signing acknowledgement information of the agreement participant for the target agreement, so as to indicate that the agreement participant agrees to sign the target agreement. It can be understood that, in the above application scenario of agreement signing, blockchain transactions are submitted by different contract invokers.

In an implementation, an initiator of crowdfunding donation can deploy a crowdfunding contract in the blockchain network, and contract codes of the crowdfunding contract defines a logic for implementing a crowdfunding donation project. In this case, a donor of the crowdfunding donation project can submit, to the blockchain network, a blockchain transaction used to invoke the crowdfunding contract. The submitted blockchain transaction includes donation information of the donor to the crowdfunding donation project (for example, a donation amount and a donation item). It can be understood that, in the above application scenario of crowdfunding donation, a same donor can make a plurality of donations, that is, can separately submit a plurality of blockchain transactions used to invoke the crowdfunding contract. Certainly, there can be a plurality of donors for the crowdfunding donation project. In other words, a same donor can submit one or more blockchain transactions to invoke the crowdfunding contract.

It should be noted that the above application scenarios are merely examples of the present specification, and the solution of invoking a smart contract in the present specification can be further applied in any other application scenario that is applicable to triggering contract execution by using a plurality of parties or a plurality of invocations. This is not limited in the present specification. For example, a check-in contract is used to transfer a predetermined amount (for example, a full-service incentive) to a blockchain account of a user when the quantity of check-in times of the user for an operation (for example, clock in) meets a predetermined quantity (for example, set to the quantity of working days of each month). Then, each time the user completes the operation, the user can submit a blockchain transaction for invoking a contract. It can be understood that in this scenario, each blockchain transaction is submitted by a same contract invoker.

Step 304: Determine whether invoking operation information of the plurality of blockchain transactions meets an invoking threshold for the target smart contract.

In this implementation, the invoking threshold of the target smart contract can be flexibly set according to a function implemented by the target smart contract. The invoking threshold can be recorded in a chain code of the blockchain node, or can be recorded in the contract code of the target smart contract, or can be recorded in a contract account of the target smart contract. Certainly, the present specification is not limited thereto.

The invoking operation information of the plurality of blockchain transactions can include at least one of the following: input parameter data included in the plurality of blockchain transactions, identity information of contract invokers submitting the plurality of blockchain transactions, a sequence of invoking the target smart contract by the plurality of blockchain transactions, or a transaction quantity of the plurality of blockchain transactions. For the invoking operation information of the above types, an input parameter condition, an identity condition for a contract invoker, an invoking sequence condition among contract invokers, and an invoking quantity condition for a contract invoker are correspondingly defined in the invoking threshold. Taking Ethereum as an example, the input parameter can be stored in the "data" field of the blockchain transaction, and the identity information of the contract invoker can be stored in the "from" field of the blockchain transaction.

For example, when the input parameter condition is defined in the invoking threshold, it can be determined whether the input parameter data included in the obtained plurality of blockchain transactions meets the input parameter condition defined in the invoking threshold. When the identity condition for the contract invoker is defined in the invoking threshold, it can be determined whether identity information of the contract invoker of the obtained plurality of blockchain transactions meets the identity condition. When the invoking sequence condition between contract invokers is defined in the invoking threshold, it can be determined whether the sequence of invoking the target smart contract by the obtained plurality of blockchain transactions meets the invoking sequence condition. When the invoking threshold defines the invoking quantity condition for the contract invoker, it can be determined whether the obtained transaction quantity of the plurality of blockchain transactions meets the invoking quantity condition. It should be noted that, when the method for invoking the smart contract in this implementation is used, at least one of the above invoking operation information and a corresponding invoking threshold can be selected to determine whether to execute the target smart contract. The following also provides examples of the invoking operation information and the corresponding invoking threshold in combination with application scenarios such as multi-party security computing, contract signing, crowdfunding donation, and check-in.

In an application scenario of multi-party security computing, it can be defined that the input parameter condition is specified private data, the identity condition of the contract invoker is a specified data provider, the invoking sequence condition is that the specified data provider provides a sequence of the specified private data, for example, a sequence of submitting blockchain transactions and an execution sequence of a plurality of blockchain transactions, and the invoking quantity condition is a quantity of data providers. Then, the invoking operation information of the plurality of blockchain transactions obtained by the blockchain node can include private data included in blockchain transactions submitted by data providers, identity information of the data providers, a sequence of invoking the target smart contract by the blockchain transactions submitted by the data providers, and a transaction quantity of the blockchain transactions submitted by all data providers. Certainly, invoking operation information of only some of the above types and the corresponding invoking thresholds can be selected. For example, the invoking threshold can be set to be successively providing private data "a" by user A, providing private data "b" by user B, and providing private data "c" by user C. In other words, when blockchain transaction 1 submitted by user A includes private data "a," blockchain transaction 2 submitted by user B includes private data "b," blockchain transaction 3 submitted by user C includes private data "c," and an execution sequence of blockchain transactions 1 to 3 is blockchain transaction 1, blockchain transaction 2, and then blockchain transaction 3, the blockchain node can be triggered to execute a multi-party security computing contract.

In an application scenario of contract signing, the identity condition of the contract invoker can be defined as a specified agreement participant, and the input parameter condition can be defined as signing acknowledgement information of the agreement participant. In this case, the invoking operation information of the plurality of blockchain transactions obtained by the blockchain node can include signing acknowledgement information and identity information of each agreement participant included in the blockchain transactions submitted by each agreement participant. Certainly, the invoking sequence condition can also be further set, that is, a signing sequence of agreement participants. For example, the invoking threshold can be set as that all of user A, user B, and user C agree to sign the target agreement. In other words, when blockchain transaction 1 submitted by user A includes signing acknowledgement information, blockchain transaction 2 submitted by user B includes signing acknowledgement information, and blockchain transaction 3 submitted by user C includes signing acknowledgement information, the blockchain node can be triggered to execute the agreement signing contract.

In the application scenario of crowdfunding donation, the input parameter condition can be defined as donation information of a donor to a crowdfunding donation project. The invoking quantity condition is the quantity of donors, but the identity condition and invoking sequence condition do not need to be set. Then, the invoking operation information of the plurality of blockchain transactions obtained by the blockchain node can include donation information included in the blockchain transactions submitted by each donor and a quantity of all donors. For example, the invoking threshold can be set as a donation amount of all donors reaching a predetermined amount, and a quantity of donors exceeding a predetermined quantity of donors. In other words, when the donation amount of all donors reaches the predetermined amount, and the quantity of donors exceeds the predetermined quantity of donors, the blockchain node can be triggered to execute the crowding contract.

In the check-in application scenario, the identity condition can be defined as a specified user who performs the check-in operation, the input parameter condition is check-in information of the user, the invoking quantity condition is the check-in times of the user, and the invoking sequence condition does not need to be set (when only one user checks in; and can be set when a plurality of users check in). Then, the invoking operation information of the plurality of blockchain transactions obtained by the blockchain node can include identity information of the user, check-in information included in the blockchain transaction submitted by the user, and the quantity of blockchain transactions submitted by the user. For example, the invoking threshold can be set as user A checking in 20 times. In other words, when user A submits blockchain transactions used to invoke a check-in contract for up to 20 times, the blockchain node can be triggered to execute the check-in contract, so as to transfer a predetermined amount to a blockchain account of user A.

Step 306: In response to the invoking operation information meeting the invoking threshold, execute a contract code corresponding to the target smart contract.

In this implementation, when the invoking operation information of the obtained plurality of blockchain transactions meets the invoking threshold, the blockchain node can execute, in response to the plurality of blockchain transactions, the contract code corresponding to the target smart contract, so as to process the input parameter data of the plurality of blockchain transactions, and the above process is also a process of executing the plurality of blockchain transactions.

In this implementation, because a plurality of blockchain transactions are involved to jointly complete invoking of the target smart contract, the invoking threshold can be divided into a final invoking threshold and at least one intermediate invoking threshold. For a plurality of blockchain transactions that jointly trigger execution of the target smart contract, some of the plurality of blockchain transactions correspond to the intermediate invoking threshold, and all of the plurality of blockchain transactions correspond to the final invoking threshold. Correspondingly, a corresponding state machine can be configured for the target smart contract, and an invoking state (including an intermediate invoking state and a final invoking state) of the state machine corresponds to each invoking threshold, so the blockchain nodes can determine, by using the invoking state of the state machine, whether to execute the target smart contract.

For example, for the obtained plurality of blockchain transactions, when the invoking operation information of the plurality of blockchain transactions meets at least one intermediate invoking threshold, the state machine corresponding to the target smart contract can be switched to the corresponding intermediate invoking state. In this case, it is indicated that the plurality of blockchain transactions belong to some of blockchain transactions that jointly trigger execution of the target smart contract, and one or more blockchain transactions will continue to be obtained to trigger execution of the target smart contract. When the invoking operation information of the plurality of blockchain transactions meets the final invoking threshold, the state machine can be switched to the final invoking state. In this case, it is indicated that the plurality of blockchain transactions are all blockchain transactions that jointly trigger execution of the target smart contract, and therefore the final invoking state can be used to instruct the blockchain node to execute the contract code of the target smart contract.

The state machine of the target smart contract can be configured in the chain code of the blockchain node, or configured in the contract code of the target smart contract, or configured in the contract account of the target smart contract. Certainly, the present specification is not limited thereto.

The above implementation shown in FIG. 3 describes a solution of invoking a smart contract by using a plurality of blockchain transactions as a whole. The following describes, from a perspective of a blockchain transaction currently received by a blockchain node, a solution for invoking a smart contract in the present specification.

Referring to FIG. 4, FIG. 4 is a flowchart illustrating another method for invoking a smart contract according to an example implementation. As shown in FIG. 4, the method is applied in a blockchain node of a blockchain network and can include the following steps:
Step 402: Determine invoking operation information of a currently received blockchain transaction for invoking a target smart contract, and update cumulative invoking information for the target smart contract according to the invoking operation information.

In this implementation, because a plurality of blockchain transactions need to jointly invoke the target smart contract to trigger execution of the target smart contract, in a process in which the plurality of blockchain transactions respectively invoke the target smart contract, invoking operation information of each blockchain transaction cumulates to form the cumulative invoking information for the target smart contract. Therefore, each time a blockchain transaction is received, the cumulative invoking information needs to be updated according to invoking operation information of the blockchain transaction.

Step 404: In response to updated cumulative invoking information meeting at least one intermediate invoking threshold for the target smart contract, continue to obtain a subsequent blockchain transaction for invoking the target smart contract.

In this implementation, when the updated cumulative invoking information meets the intermediate invoking threshold, it indicates that the currently cumulated received blockchain transactions belong to some of blockchain transactions that jointly trigger execution of the target smart contract, and one or more blockchain transactions will continue to be received to trigger execution of the target smart contract.

Step 406: In response to the updated cumulative invoking information meeting a final invoking threshold for the target smart contract, execute a contract code corresponding to the target smart contract.

In this implementation, when the updated cumulative invoking information meets the final invoking threshold, it indicates that the currently cumulated received blockchain transactions can jointly trigger execution of the target smart contract, that is, the currently cumulated received blockchain transactions belong to all blockchain transactions that jointly trigger execution of the target smart contract.

Similarly, it can be set that a plurality of blockchain transactions separately received within a current block generation period are used to jointly trigger execution of the target smart contract. For example, the blockchain node can determine whether a currently received blockchain transaction that invokes the target smart contract and a previous blockchain transaction that invokes the target smart contract are in a same block generation period. In response to the currently received blockchain transaction for invoking the target smart contract and the previous blockchain transaction for invoking the target smart contract being in the same block generation period, and the cumulative invoking information updated according to invoking operation information of the previous blockchain transaction meeting an intermediate invoking threshold of the at least one intermediate invoking threshold, invoking operation information of the currently received blockchain transaction is determined. The previous blockchain transaction belongs to one of the blockchain transactions that jointly trigger execution of the target smart contract, that is, cumulative invoking information updated according to the invoking operation information of the previous blockchain transaction meets the above at least one intermediate invoking threshold.

Similarly, blockchain transactions for invoking the target smart contract are submitted separately by a same contract invoker or by a plurality of contract invokers.

Similarly, the invoking operation information can include input parameter data included in the blockchain transaction, and the cumulative invoking information includes cumulative input parameter data, that is, input parameter data included in cumulative received blockchain transactions that meet the intermediate invoking threshold (hereinafter referred to as a cumulative blockchain transaction). After a blockchain transaction is received, input parameter data included in the blockchain transaction can be determined, and the cumulative input parameter data is updated according to the input parameter data, so as to determine whether the updated cumulative input parameter data meets an input parameter condition defined in the final invoking threshold or the at least one intermediate invoking threshold.

Similarly, the invoking operation information can include identity information of a contract invoker submitting a blockchain transaction, and the cumulative invoking information includes cumulative identity information, that is, identity information of a contract invoker indicated by the cumulative blockchain transactions. Then, after a blockchain transaction is received, identity information of a contract invoker submitting the blockchain transaction can be determined, and the cumulative identity information is updated according to the identity information, so as to determine whether the updated cumulative identity information meets an identity condition defined for the contract invoker in the final invoking threshold or in an intermediate invoking threshold of the at least one intermediate invoking threshold.

Similarly, the invoking operation information can include a sequence of invoking the target smart contract by the blockchain transactions, and the cumulative invoking information includes a cumulative invoking sequence, that is, an execution sequence of the cumulative blockchain transactions. After a blockchain transaction is received, the cumulative invoking sequence can be updated, so as to determine whether the updated cumulative invoking sequence meets an invoking sequence condition among contract invokers defined in the final invoking threshold or in an intermediate invoking threshold of the at least one intermediate invoking threshold.

Similarly, the invoking operation information can include a transaction quantity of blockchain transactions, and the cumulative invoking information includes a cumulative transaction quantity, and only the transaction quantity of blockchain transactions is cumulated. Then, after a blockchain transaction is received, the cumulative transaction quantity can be updated, so as to determine whether the updated cumulative transaction quantity meets an invoking quantity condition for a contract invoker defined in the final invoking threshold or in an intermediate invoking threshold of the at least one intermediate invoking threshold.

Similarly, a state machine can be configured for the target smart contract, so as to determine, according to an invoking state of the state machine, whether to execute the target smart contract. The invoking state includes an intermediate invoking state and a final invoking state. The intermediate invoking state is in a one-to-one correspondence with the intermediate invoking threshold, and the final invoking state is corresponding to the final invoking threshold. For example, when the updated cumulative invoking information meets the at least one intermediate invoking threshold, the state machine corresponding to the target smart contract can be switched to a corresponding intermediate invoking state. When the updated cumulative invoking information meets the final invoking threshold, the state machine is switched to the final invoking state, where the final invoking state is used to instruct the blockchain node to execute the contract code of the target smart contract.

For ease of understanding, the following separately describes a smart contract invoking solution in the present specification in detail with reference to application scenarios of multi-party security computing, contract signing, and crowdfunding donation.

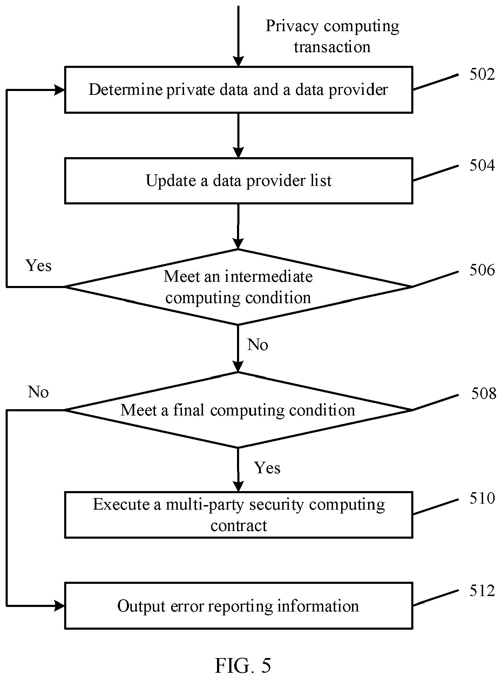

Referring to FIG. 5, FIG. 5 is a flowchart illustrating a multi-party security computing method based on a smart contract according to an example implementation. As shown in FIG. 5, the method is applied in a blockchain node of a blockchain network and can include the following steps:
Step 502: Determine private data of a received privacy computing transaction and a data provider that submits the privacy computing transaction.

In this implementation, the private data is used as input parameter data of a signing transaction, and can be stored in the "data" field of the privacy computing transaction. Identity information of the data provider that submits the privacy computing transaction can be determined by using content stored in the "from" field of the privacy computing transaction.

In this implementation, to improve security of the private data, each data provider can encrypt the privacy computing transaction. In addition, a trusted execution environment (TEE) is deployed in the blockchain node. When executing a multi-party security computing contract, the blockchain node reads a contract code of the multi-party security computing contract into the TEE, and reads all privacy computing transactions invoking the multi-party security computing contract into the TEE for decryption, so as to process, in the TEE, input parameter data included in the privacy computing transactions in a plaintext form by executing the contract code. For encrypted transmission of the privacy computing transaction, a form such as symmetric encryption, asymmetric encryption, a combination of symmetric encryption and asymmetric encryption (that is, digital envelope) can be used. This is not limited in the present specification.

Step 504: Update a data provider list according to input parameter data and the data provider.

In this implementation, the data provider list is used to record cumulative invoking information formed based on received blockchain transactions. For example, an updated data provider list can be recorded in a contract account of the multi-party security computing contract.

Step 506: If the cumulative invoking information recorded in the data provider list meets an intermediate computing condition, perform step 502; otherwise, perform step 508.

Step 508: If the cumulative invoking information recorded in the data provider list meets a final computing condition, perform step 510; otherwise, perform step 512.

For example, the invoking threshold of the multi-party security computing contract and the invoking state of the corresponding state machine are shown in Table 1.

**Table 1**

| Invoking threshold | Content | Invoking state |
|---|---|---|
| Intermediate computing condition 1 | User A provides private data a | Intermediate invoking state 1 |
| Intermediate computing condition 2 | User A provides private data a, and user B provides private data b | Intermediate invoking state 2 |
| Final computing condition | User A provides private data a, user B provides private data b, and user C provides private data c | Final invoking state |

For example, privacy computing transaction 1 submitted by user A is currently received, and privacy computing transaction 1 includes private data a. The cumulative invoking information can then be updated to "User A provides private data a." In this case, the state machine of the multi-party security computing contract is switched from an initial state to intermediate invoking state 1.

Then, privacy computing transaction 2 submitted by user B continues to be received, and privacy computing transaction 2 includes private data b. Then, the cumulative invoking information can be updated to "User A provides private data a, and user B provides private data b." In this case, the state machine of the multi-party security computing contract is switched to intermediate invoking state 2.

Further, privacy computing transaction 3 submitted by user C continues to be received, and privacy computing transaction 3 includes private data c. Then, the cumulative invoking information can be updated to "User A provides private data a, user B provides private data b, and user C provides private data c." In this case, the state machine of the multi-party security computing contract is switched to the final invoking state. In this case, the state machine is switched to the final invoking state, and after determining that the state machine is in the final invoking state, the blockchain node can execute the contract code of the multi-party security computing contract, so as to perform computing on private data a-c.

Step 510: Execute the multi-party security computing contract.

Step 512: Output error reporting information.

In this implementation, when the received privacy computing transaction neither meets the intermediate computing condition nor meets the final computing condition, it indicates that the invoking operation information of the privacy computing transaction is incorrect and does not meet content set by the invoking threshold. For example, a data provider submitting the privacy computing transaction is not any one of users A-C, but user D; or, the private data provided by user A is not private data a, but private data d. In this case, the state machine of the multi-party security computing contract can be reset to the initial state.

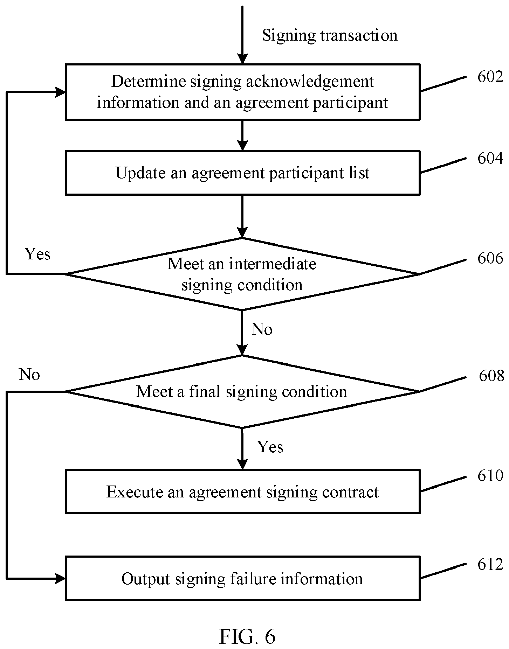

Referring to FIG. 6, FIG. 6 is a flowchart illustrating an agreement signing method based on a smart contract according to an example implementation. As shown in FIG. 6, the method is applied in a blockchain node of a blockchain network and can include the following steps:
Step 602: Determine signing acknowledgement information included in a received signing transaction and an agreement participant that submits the signing transaction.

In this implementation, the signing acknowledgement information can be stored in the "data" field of the agreement signing transaction as input parameter data of the agreement signing transaction, and identity information of the agreement participant that submits the agreement signing transaction can be determined by using content stored in the "from" field of the agreement signing transaction.

Step 604: Update an agreement participant list according to the signing acknowledgement information and the agreement participant.

In this implementation, the agreement participant list is used to record cumulative invoking information formed based on received blockchain transactions. For example, an updated agreement participant list can be recorded in a contract account of an agreement signing contract.

Step 606: If the cumulative invoking information recorded in the agreement participant list meets an intermediate signing condition, perform step 602; otherwise, perform step 608.

Step 608: If the cumulative invoking information recorded in the agreement participant list meets a final signing condition, perform step 610; otherwise, perform step 612.

For example, the invoking threshold of the agreement signing contract and the invoking state of the corresponding state machine are shown in Table 2.

**Table 2**

| Invoking threshold | Content | Invoking state |
|---|---|---|
| Intermediate signing condition 1 | Any one of users A, B, and C agrees to sign the target agreement | Intermediate invoking state 1 |
| Intermediate signing condition 2 | Any two of users A, B and C agree to sign the target agreement | Intermediate invoking state 2 |
| Final signing condition | All of users A, B and C agree to sign the target agreement | Final invoking state |

For example, currently, signing transaction 1 submitted by user A is received, and signing transaction 1 includes signing acknowledgement information (indicating that user A agrees to sign the target agreement). Then, the cumulative invoking information can be updated to "user A agrees to sign the target agreement." In this case, the state machine of the agreement signing contract is switched from an initial state to intermediate invoking state 1.

Then, signing transaction 2 submitted by user B continues to be received, and signing transaction 2 includes signing acknowledgement information (indicating that user B agrees to sign the target agreement). Then, the cumulative invoking information can be updated to "user A and user B agree to sign the target agreement." In this case, the state machine of the signing contract is switched to intermediate invoking state 2.

Further, signing transaction 3 submitted by user C continues to be received, and signing transaction 3 includes signing acknowledgement information (indicating that user C agrees to sign the target agreement). Then, the cumulative invoking information can be updated to "Users A, B, and C agree to sign the target agreement." In this case, the state machine of the agreement signing contract is switched to the final invoking state. In this case, the state machine is switched to the final invoking state, and after determining that the state machine is in the final invoking state, the blockchain node can execute the contract code of the agreement signing contract, so as to complete a signing operation on the target agreement.

Step 610: Execute the agreement signing contract.

Step 612: Output signing failure information.

In this implementation, when the received signing transaction neither meets the intermediate signing condition nor meets the final signing condition, it indicates that the invoking operation information of the signing transaction is incorrect and does not meet content set by the invoking threshold. For example, a agreement participant submitting the signing transaction is not any one of users A-C, but user D; or the input parameter data provided by user A is not signing acknowledgement information, but signing non-acknowledgement information. In this case, the state machine of the signing contract can be reset to the initial state.

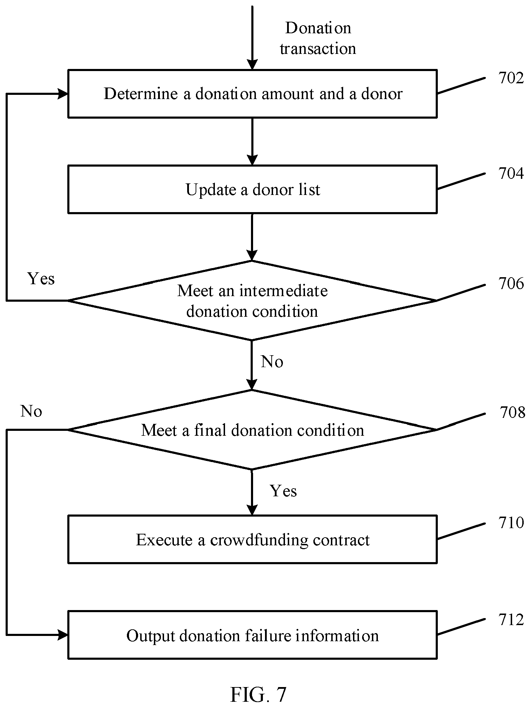

Referring to FIG. 7, FIG. 7 is a flowchart illustrating a crowdfunding donation method based on a smart contract according to an example implementation. As shown in FIG. 7, the method is applied in a blockchain node of a blockchain network and can include the following steps:
Step 702: Determine a donation amount and a donor of a received donation transaction.

In this implementation, the donation amount can be stored in the "data" field of the donation transaction as input parameter data of the donation transaction, and identity information of the donor submitting the donation transaction can be determined by using content stored in the "from" field of the donation transaction.

Step 704: Update a donor list according to the donation amount and the donor.

In this implementation, the donor list is used to record cumulative invoking information formed based on received blockchain transactions. For example, an updated donor list can be recorded in a contract account of a crowdfunding contract.

Step 706: If the cumulative invoking information recorded in the donor list meets an intermediate donation condition, perform step 702; otherwise, perform step 708.

Step 708: If the cumulative invoking information recorded in the donor list meets a final donation condition, perform step 710; otherwise, perform step 712.

For example, the invoking threshold of the crowdfunding contract and the invoking state of the corresponding state machine are shown in Table 3.

**Table 3**

| Invoking threshold | Content | Invoking state |
|---|---|---|
| Intermediate donation condition | Each user's donation amount exceeds the minimum donation amount, but the total donation amount does not reach a crowdfunding amount | Intermediate invoking state |
| Final donation condition | Each user's donation amount exceeds the minimum donation amount, and the total donation amount reaches the crowdfunding amount | Final invoking state |

For example, donation transaction a submitted by user A is currently received, and donation transaction a includes a donation amount of 500 yuan. Then, the cumulative invoking information can be updated to "User A donates 500 yuan, and the total donation amount has reached 500 yuan." Assume that the minimum donation amount is 50 yuan and the crowdfunding amount is 1000 yuan. Since the total donation amount does not reach 1000 yuan currently, the state machine of the crowdfunding contract can be switched from an initial state to the intermediate state.

Then, donation transaction b submitted by user B continues to be received, and donation transaction b includes a donation amount of 300 yuan. Then, the cumulative invoking information can be updated to "User A donates 500 yuan and user B donates 300 yuan, and the total donation amount has reached 800 yuan." In this case, since the total donation amount does not reach 1000 yuan, the state machine of the crowdfunding contract does not need to be switched.

Further, donation transaction c submitted by user C continues to be received, and donation transaction c includes a donation amount of 200 yuan. Then, the cumulative invoking information can be updated to "User A donates 500 yuan, user B donates 300 yuan, user C donates 200 yuan, and the total donation amount has reached 1000 yuan." In this case, since the total donation amount reaches 1000 yuan, the state machine of the crowdfunding contract can be switched to the final invoking state. In this case, the state machine is switched to the final invoking state, and after determining that the state machine is in the final invoking state, the blockchain node can execute the contract code of the crowdfunding contract, so as to complete implementation of the crowdfunding donation project.

Step 710: Execute the crowdfunding contract.

Step 712: Output donation failure information.

In this implementation, when the received donation transaction neither meets the intermediate donation condition nor meets the final donation condition, it indicates that the invoking operation information of the donation transaction is incorrect and does not meet content set by the invoking threshold. For example, a donor's donation amount does not exceed the minimum donation amount. In this case, the state machine of the crowdfunding contract can be reset to the initial state.

Corresponding to the above method implementation, the present specification further provides an implementation of an apparatus for invoking a smart contract.

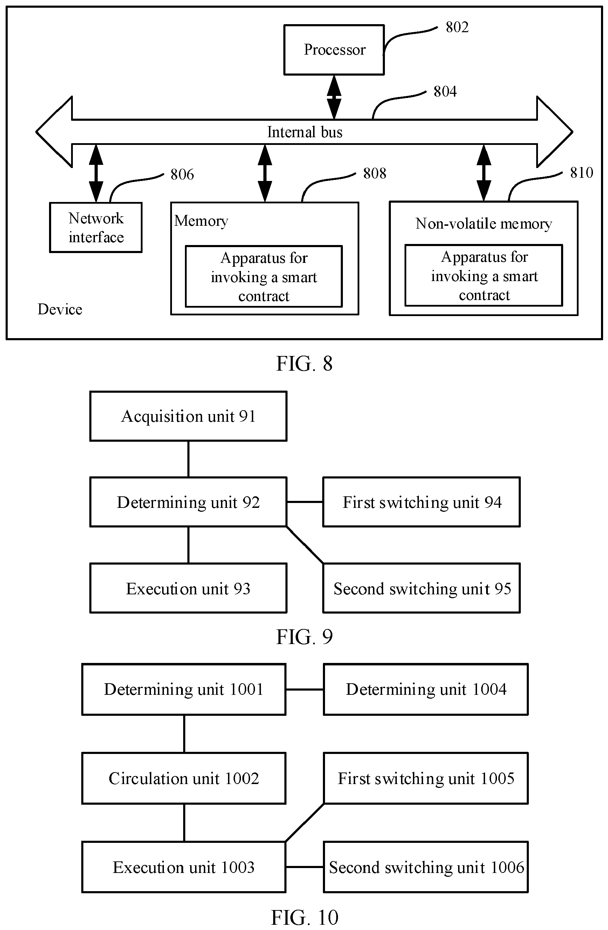

FIG. 8 is a schematic structural diagram illustrating a device, according to an example implementation. Referring to FIG. 8, in terms of hardware, the device includes a processor 802, an internal bus 804, a network interface 806, a memory 808, and a non-volatile memory 810, and can further include hardware needed by other services. The processor 802 reads a corresponding computer program from the non-volatile memory 810 to the memory 808, and then runs the computer program to form an apparatus for invoking a smart contract at a logical level. In addition to a software implementation method, one or more implementations of the present specification do not exclude another implementation method, such as a logic device or a combination of software and hardware, that is, execution bodies of the following processing procedures are not limited to each logical unit, or can be hardware or a logic device.

Referring to FIG. 9, in a software implementation, an apparatus for invoking a smart contract can include: an acquisition unit 91, configured to separately obtain a plurality of blockchain transactions, the plurality of blockchain transactions each being used to invoke a target smart contract; a determining unit 92, configured to determine whether invoking operation information of the plurality of blockchain transactions meets an invoking threshold for the target smart contract; and an execution unit 93, configured to: in response to the invoking operation information meeting the invoking threshold, execute a contract code corresponding to the target smart contract.

In some implementations, the acquisition unit 91 is, for example, configured to: obtain the plurality of blockchain transactions separately received in a current block generation period.

In some implementations, the plurality of blockchain transactions are submitted separately by a same contract invoker or by a plurality of contract invokers.

In some implementations, the invoking operation information includes input parameter data included in the plurality of blockchain transactions. The determining unit 92 is, for example, configured to: determine whether the input parameter data meets an input parameter condition defined in the invoking threshold.

In some implementations, the invoking operation information includes identity information of a contract invoker submitting a blockchain transaction of the plurality of blockchain transactions; and the determining unit 92 is, for example, configured to: determine whether the identity information meets an identity condition defined for the contract invoker in the invoking threshold.

In some implementations, the invoking operation information includes a sequence of invoking the target smart contract by the plurality of blockchain transactions; and the determining unit 92 is, for example, configured to: determine whether the sequence of invoking the target smart contract meets an invoking sequence condition among contract invokers of the plurality of blockchain transactions defined in the invoking threshold.

In some implementations, the invoking operation information includes a transaction quantity of the plurality of blockchain transactions, and the determining unit 92 is, for example, configured to: determine whether the transaction quantity meets an invoking quantity condition for a contract invoker of the plurality of blockchain transactions defined in the invoking threshold.

In some implementations, the invoking threshold includes a final invoking threshold and at least one intermediate invoking threshold, and the apparatus further includes: a first switching unit 94, configured to: in response to the invoking operation information of the plurality of blockchain transactions meeting an intermediate invoking threshold of the at least one intermediate invoking threshold, switch a state machine corresponding to the target smart contract to a corresponding intermediate invoking state; and a second switching unit 95, configured to: in response to the invoking operation information meeting the final invoking threshold, switch the state machine to a final invoking state, the final invoking state configured to instruct the blockchain node to execute the contract code.

Referring to FIG. 10, in another software implementation, an apparatus for invoking a smart contract can include: a determining unit 1001, configured to: determine invoking operation information of a currently received blockchain transaction for invoking a target smart contract, and update cumulative invoking information for the target smart contract according to the invoking operation information; a circulation unit 1002, configured to: in response to updated cumulative invoking information meeting at least one intermediate invoking threshold for the target smart contract, continue to obtain a subsequent blockchain transaction for invoking the target smart contract; and an execution unit 1003, configured to: in response to the updated cumulative invoking information meeting a final invoking threshold for the target smart contract, execute a contract code corresponding to the target smart contract.

In some implementations, the apparatus further includes: a determining unit 1004, configured to: determine whether the currently received blockchain transaction for invoking the target smart contract and a previous blockchain transaction for invoking the target smart contract are in a same block generation period, and whether the cumulative invoking information updated according to invoking operation information of the previous blockchain transaction meets an intermediate invoking threshold of the at least one intermediate invoking threshold; and in response to the currently received blockchain transaction for invoking the target smart contract and the previous blockchain transaction for invoking the target smart contract being in the same block generation period, and the cumulative invoking information updated according to invoking operation information of the previous blockchain transaction meeting an intermediate invoking threshold of the at least one intermediate invoking threshold, determine the invoking operation information of the currently received blockchain transaction.

In some implementations, blockchain transactions for invoking the target smart contract are submitted separately by a same contract invoker or by a plurality of contract invokers.

In some implementations, the invoking operation information includes input parameter data included in the blockchain transaction, and the cumulative invoking information includes cumulative input parameter data. The determining unit 1004 is further configured to: determine whether updated cumulative input parameter data meets an input parameter condition defined in the final invoking threshold or in an intermediate invoking threshold of the at least one intermediate invoking threshold.

In some implementations, the invoking operation information includes identity information of a contract invoker submitting the current blockchain transaction, and the cumulative invoking information includes cumulative identity information. The determining unit 1004 is further configured to: determine whether updated cumulative identity information meets an identity condition defined for the contract invoker in the final invoking threshold or in an intermediate invoking threshold of the at least one intermediate invoking threshold.

In some implementations, the invoking operation information includes a sequence of invoking the target smart contract by blockchain transactions, and the cumulative invoking information includes a cumulative invoking sequence. The determining unit 1004 is further configured to: determine whether an updated cumulative invoking sequence meets an invoking sequence condition among contract invokers defined in the final invoking threshold or in an intermediate invoking threshold of the at least one intermediate invoking threshold.

In some implementations, the invoking operation information includes a transaction quantity of the current blockchain transaction, and the cumulative invoking information includes a cumulative transaction quantity. The determining unit 1004 is further configured to: determine whether an updated cumulative transaction quantity meets an invoking quantity condition for a contract invoker defined in the final invoking threshold or in an intermediate invoking threshold of the at least one intermediate invoking threshold.

In some implementations, the apparatus further includes: a first switching unit 1005, configured to: in response to the updated cumulative invoking information meeting the at least one intermediate invoking threshold, switch a state machine corresponding to the target smart contract to a corresponding intermediate invoking state; and a second switching unit 1006, configured to: in response to the updated cumulative invoking information meeting the final invoking threshold, switch the state machine to a final invoking state, the final invoking state configured to instruct the blockchain node to execute the contract code.

The system, apparatus, module, or unit illustrated in the implementations can be implemented by using a computer chip or an entity, or can be implemented by using a product having a certain function. A typical implementation device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

In a typical configuration, the computer includes one or more processors (CPU), an input/output interface, a network interface, and a memory.

The memory can include a non-persistent memory, a random access memory (RAM), a non-volatile memory, and/or another form that are in a computer readable medium, for example, a read-only memory (ROM) or a flash memory (flash RAM). The memory is an example of the computer readable medium.

The computer readable medium includes persistent, non-persistent, movable, and unmovable media that can store information by using any method or technology. The information can be a computer readable instruction, a data structure, a program module, or other data. Examples of the computer storage medium include but are not limited to a phase change random access memory (PRAM), a static random access memory (SRAM), a dynamic random access memory (DRAM), another type of RAM, a ROM, an electrically erasable programmable read-only memory (EEPROM), a flash memory or another memory technology, a compact disc read-only memory (CD-ROM), a digital versatile disc (DVD) or another optical storage, a cassette magnetic tape, a magnetic disk storage, a quantum memory, a graphene-based storage medium, another magnetic storage device, or any other non-transmission medium. The computer storage medium can be used to store information accessible by a computing device. Based on the definition in the present specification, the computer readable medium does not include transitory media such as a modulated data signal and carrier.

It is also worthwhile to note that terms "include," "comprise" or any other variant thereof is intended to cover non-exclusive inclusion, so processes, methods, products or devices that include a series of elements include not only those elements but also other elements that are not explicitly listed, or elements inherent in such processes, methods, products or devices. An element described by "includes a ..." further includes, without more constraints, another identical element in the process, method, product, or device that includes the element.

Specific implementations of the present specification are described above. Other implementations fall within the scope of the appended claims. In some situations, the actions or steps described in the claims can be performed in an order different from the order in the implementation and the desired results can still be achieved. In addition, the process depicted in the accompanying drawings does not necessarily require a particular execution order to achieve the desired results. In some implementations, multi-tasking and parallel processing can be advantageous.

The terms used in one or more implementations of the present specification are merely for illustrating specific implementations, and are not intended to limit one or more implementations of the present specification. The terms "a" and "the" of singular forms used in one or more implementations of the present specification and the appended claims are also intended to include plural forms, unless otherwise specified in the context clearly. It should be further understood that the term "and/or" used in the present specification indicates and includes any or all possible combinations of one or more associated listed items.

It should be understood that although terms "first," "second," "third," etc., can be used in one or more implementations of the present specification to describe various types of information, the information is not limited to the terms. These terms are merely used to differentiate between information of the same type. For example, without departing from the scope of one or more implementations of the present specification, first information can also be referred to as second information, and similarly, the second information can be referred to as the first information. Depending on the context, for example, the word "if' used herein can be explained as "while," "when," or "in response to determining."

The above descriptions are merely preferred implementations of one or more implementations of the present specification, and are not intended to limit one or more implementations of the present specification. Any modification, equivalent replacement, improvement, etc., made without departing from the principles of one or more implementations of the present specification shall fall within the protection scope of one or more implementations of the present specification.

## Claims

1. A method for invoking a multi-party security computation smart contract, applied in a blockchain node, the method comprising:
separately (302) obtaining a plurality of blockchain transactions, the plurality of blockchain transactions each including invoking operation information to invoke a target smart contract, wherein the separately obtained blockchain transactions are submitted by a plurality of contract invokers in a current block generation period;
determining (304) whether the invoking operation information of the obtained plurality of blockchain transactions meets an invoking threshold for the target smart contract, wherein the invoking operation information includes input parameter data included in the obtained plurality of blockchain transactions, and a sequence of invoking the target smart contract by the obtained plurality of blockchain transactions; the determining (304) including determining whether the input parameter data included in the obtained plurality of blockchain transactions meets an input parameter condition defined in the invoking threshold and whether the sequence of invoking the target smart contract by the obtained plurality of blockchain transactions meets an invoking sequence condition among contract invokers of the obtained plurality of blockchain transactions defined in the invoking threshold; and
in response to the invoking operation information of the obtained plurality of blockchain transactions meeting the invoking threshold, executing (306) a contract code corresponding to the target smart contract, wherein the executing (306) the contract code corresponding to the target smart contract is only jointly triggered in response to the obtained plurality of blockchain transactions being obtained in the current block generation period.

2. The method according to claim 1, wherein:
the invoking operation information includes identity information of a contract invoker submitting a blockchain transaction of the plurality of blockchain transactions; and
the determining whether the invoking operation information of the obtained plurality of blockchain transactions meets the invoking threshold for the target smart contract includes:
determining whether the identity information meets an identity condition for the contract invoker included in the invoking threshold.

3. The method according to claim 1, wherein:
the invoking operation information includes a transaction quantity of the obtained plurality of blockchain transactions; and
the determining whether the invoking operation information of the obtained plurality of blockchain transactions meets the invoking threshold for the target smart contract includes:
determining whether the transaction quantity meets an invoking quantity condition for a contract invoker of the obtained plurality of blockchain transactions defined included in the invoking threshold.

4. The method according to claim 1, wherein the invoking threshold includes a final invoking threshold and at least one intermediate invoking threshold; and
the method further comprises:
in response to the invoking operation information of the obtained plurality of blockchain transactions meeting an intermediate invoking threshold of the at least one intermediate invoking threshold, switching a state machine corresponding to the target smart contract to a corresponding intermediate invoking state; and
in response to the invoking operation information meeting the final invoking threshold, switching the state machine to a final invoking state, the final invoking state configured to instruct the blockchain node to execute the contract code.

5. The method according to claim 1, wherein:
the separately obtaining a plurality of blockchain transactions include:
determining invoking operation information of a currently received blockchain transaction for invoking the target smart contract, and updating cumulative invoking information for the target smart contract according to the invoking operation information of the currently received blockchain transaction;
in response to updated cumulative invoking information meeting at least one intermediate invoking threshold for the target smart contract, continuing to obtain a subsequent blockchain transaction for invoking the target smart contract; and
the invoking operation information meeting the invoking threshold includes the updated cumulative invoking information meeting a final invoking threshold for the target smart contract.

6. The method according to claim 5, further comprising:
determining whether the currently received blockchain transaction for invoking the target smart contract and a previous blockchain transaction for invoking the target smart contract are in a same block generation period, and whether the cumulative invoking information updated according to invoking operation information of the previous blockchain transaction meets an intermediate invoking threshold of the at least one intermediate invoking threshold; and
in response to the currently received blockchain transaction for invoking the target smart contract and the previous blockchain transaction for invoking the target smart contract being in the same block generation period, and the cumulative invoking information updated according to invoking operation information of the previous blockchain transaction meeting an intermediate invoking threshold of the at least one intermediate invoking threshold, determining the invoking operation information of the currently received blockchain transaction.

7. The method according to claim 5, wherein:
the cumulative invoking information includes cumulative input parameter data; and
the method further comprises:
determining whether updated cumulative input parameter data meets an input parameter condition included in the final invoking threshold or in an intermediate invoking threshold of the at least one intermediate invoking threshold.

8. The method according to claim 5, wherein:
the invoking operation information includes identity information of a contract invoker submitting the current blockchain transaction, and the cumulative invoking information includes cumulative identity information; and
the method further comprises:
determining whether updated cumulative identity information meets an identity condition for the contract invoker included in the final invoking threshold or in an intermediate invoking threshold of the at least one intermediate invoking threshold.

9. The method according to claim 5, further comprising:
in response to the updated cumulative invoking information meeting the at least one intermediate invoking threshold, switching a state machine corresponding to the target smart contract to a corresponding intermediate invoking state; and
in response to the updated cumulative invoking information meeting the final invoking threshold, switching the state machine to a final invoking state, the final invoking state configured to instruct the blockchain node to execute the contract code.

10. An electronic device, comprising:
a processor; and
a memory storing executable instructions of the processor; and
the processor implementing the method according to any one of claims 1 to 9 by running the executable instructions.

## Patentansprüche

1. Verfahren zum Aufrufen eines Smart Contracts zur Mehrparteien-Sicherheitsberechnung, das in einem Blockchain-Knoten angewendet wird, wobei das Verfahren umfasst:
separates (302) Erhalten einer Mehrzahl von Blockchain-Transaktionen, wobei die Mehrzahl von Blockchain-Transaktionen jeweils Aufruf-Operationsinformationen zum Aufrufen eines Ziel-Smart Contracts umfasst, wobei die separat erhaltenen Blockchain-Transaktionen von einer Mehrzahl von Contract-Aufrufern in einer aktuellen Blockerzeugungsperiode übermittelt werden;
Bestimmen (304), ob die Aufruf-Operationsinformationen der erhaltenen Mehrzahl von Blockchain-Transaktionen einen Aufruf-Schwellwert für den Ziel-Smart Contract erfüllen, wobei die Aufruf-Operationsinformationen Eingangsparameterdaten, die in der erhaltenen Mehrzahl von Blockchain-Transaktionen enthalten sind, und eine Sequenz des Aufrufens des Ziel-Smart Contracts durch die erhaltene Mehrzahl von Blockchain-Transaktionen umfassen; wobei das Bestimmen (304) ein Bestimmen umfasst, ob die Eingangsparameterdaten, die in der erhaltenen Mehrzahl von Blockchain-Transaktionen enthalten sind, eine Eingangsparameterbedingung erfüllen, die in dem Aufruf-Schwellwert definiert ist, und ob die Sequenz des Aufrufens des Ziel-Smart Contracts durch die erhaltene Mehrzahl von Blockchain-Transaktionen eine Aufruf-Sequenzbedingung unter Contract-Aufrufern der erhaltenen Mehrzahl von Blockchain-Transaktionen erfüllt, die in dem Aufruf-Schwellwert definiert ist; und
als Reaktion darauf, dass die Aufruf-Operationsinformationen der erhaltenen Mehrzahl von Blockchain-Transaktionen den Aufruf-Schwellwert erfüllen, Ausführen (306) eines Contract-Codes, der dem Ziel-Smart Contract entspricht, wobei das Ausführen (306) des Contract-Codes, der dem Ziel-Smart Contract entspricht, nur gemeinsam als Reaktion darauf ausgelöst wird, dass die erhaltene Mehrzahl von Blockchain-Transaktionen in der aktuellen Blockerzeugungsperiode erhalten wird.

2. Verfahren nach Anspruch 1, wobei:
die Aufruf-Operationsinformationen Identitätsinformationen eines Contract-Aufrufers umfassen, der eine Blockchain-Transaktion der Mehrzahl von Blockchain-Transaktionen übermittelt; und
das Bestimmen, ob die Aufruf-Operationsinformationen der erhaltenen Mehrzahl von Blockchain-Transaktionen den Aufruf-Schwellwert für den Ziel-Smart Contract erfüllen, umfasst:
Bestimmen, ob die Identitätsinformationen eine Identitätsbedingung für den Contract-Aufrufer erfüllen, die in dem Aufruf-Schwellwert enthalten ist.

3. Verfahren nach Anspruch 1, wobei:
die Aufruf-Operationsinformationen eine Transaktionsmenge der erhaltenen Mehrzahl von Blockchain-Transaktionen umfassen; und
das Bestimmen, ob die Aufruf-Operationsinformationen der erhaltenen Mehrzahl von Blockchain-Transaktionen den Aufruf-Schwellwert für den Ziel-Smart Contract erfüllen, umfasst:
Bestimmen, ob die Transaktionsmenge eine Aufruf-Mengenbedingung für einen Contract-Aufrufer der erhaltenen Mehrzahl von Blockchain-Transaktionen erfüllt, die in dem Aufruf-Schwellwert enthalten ist.

4. Verfahren nach Anspruch 1, wobei der Aufruf-Schwellwert einen endgültigen Aufruf-Schwellwert und wenigstens einen Zwischen-Aufruf-Schwellwert umfasst; und
das Verfahren ferner umfasst:
als Reaktion darauf, dass die Aufruf-Operationsinformationen der erhaltenen Mehrzahl von Blockchain-Transaktionen einen Zwischen-Aufruf-Schwellwert des wenigstens einen Zwischen-Aufruf-Schwellwerts erfüllen, Umschalten einer Zustandsmaschine, die dem Ziel-Smart Contract entspricht, in einen entsprechenden Zwischen-Aufruf-Zustand; und
als Reaktion darauf, dass die Aufruf-Operationsinformationen den endgültigen Aufruf-Schwellwert erfüllen, Umschalten der Zustandsmaschine in einen endgültigen Aufruf-Zustand, wobei der endgültige Aufruf-Zustand dazu eingerichtet ist, den Blockchain-Knoten anzuweisen, den Contract-Code auszuführen.

5. Verfahren nach Anspruch 1, wobei:
das separate Erhalten einer Mehrzahl von Blockchain-Transaktionen umfasst:
Bestimmen von Aufruf-Operationsinformationen einer aktuell empfangenen Blockchain-Transaktion zum Aufrufen des Ziel-Smart Contracts und Aktualisieren von kumulativen Aufruf-Informationen für den Ziel-Smart Contract gemäß den Aufruf-Operationsinformationen der aktuell empfangenen Blockchain-Transaktion;
als Reaktion darauf, dass aktualisierte kumulative Aufruf-Informationen wenigstens einen Zwischen-Aufruf-Schwellwert für den Ziel-Smart Contract erfüllen, Fortsetzen des Erhaltens einer nachfolgenden Blockchain-Transaktion zum Aufrufen des Ziel-Smart Contracts; und
die Aufruf-Operationsinformationen, die den Aufruf-Schwellwert erfüllen, die aktualisierten kumulativen Aufruf-Informationen umfassen, die einen endgültigen Aufruf-Schwellwert für den Ziel-Smart Contract erfüllen.

6. Verfahren nach Anspruch 5, ferner umfassend:
Bestimmen, ob die aktuell empfangene Blockchain-Transaktion zum Aufrufen des Ziel-Smart Contracts und eine vorherige Blockchain-Transaktion zum Aufrufen des Ziel-Smart Contracts in einer gleichen Blockerzeugungsperiode sind, und ob die kumulativen Aufruf-Informationen, die gemäß den Aufruf-Operationsinformationen der vorherigen Blockchain-Transaktion aktualisiert wurden, einen Zwischen-Aufruf-Schwellwert des wenigstens einen Zwischen-Aufruf-Schwellwerts erfüllen; und
als Reaktion darauf, dass die aktuell empfangene Blockchain-Transaktion zum Aufrufen des Ziel-Smart Contracts und die vorherige Blockchain-Transaktion zum Aufrufen des Ziel-Smart Contracts in der gleichen Blockerzeugungsperiode sind, und die kumulativen Aufruf-Informationen, die gemäß den Aufruf-Operationsinformationen der vorherigen Blockchain-Transaktion aktualisiert wurden, einen Zwischen-Aufruf-Schwellwert des wenigstens einen Zwischen-Aufruf-Schwellwerts erfüllen, Bestimmen der Aufruf-Operationsinformationen der aktuell empfangenen Blockchain-Transaktion.

7. Verfahren nach Anspruch 5, wobei:
die kumulativen Aufruf-Informationen kumulative Eingangsparameterdaten umfassen; und
das Verfahren ferner umfasst:
Bestimmen, ob aktualisierte kumulative Eingangsparameterdaten eine Eingangsparameterbedingung erfüllen, die in dem endgültigen Aufruf-Schwellwert oder in einem Zwischen-Aufruf-Schwellwert des wenigstens einen Zwischen-Aufruf-Schwellwerts enthalten ist.

8. Verfahren nach Anspruch 5, wobei:
die Aufruf-Operationsinformationen Identitätsinformationen eines Contract-Aufrufers umfassen, der die aktuelle Blockchain-Transaktion übermittelt, und die kumulativen Aufruf-Informationen kumulative Identitätsinformationen umfassen; und
das Verfahren ferner umfasst:
Bestimmen, ob aktualisierte kumulative Identitätsinformationen eine Identitätsbedingung für den Contract-Aufrufer erfüllen, die in dem endgültigen Aufruf-Schwellwert oder in einem Zwischen-Aufruf-Schwellwert des wenigstens einen Zwischen-Aufruf-Schwellwerts enthalten ist.

9. Verfahren nach Anspruch 5, ferner umfassend:
als Reaktion darauf, dass die aktualisierten kumulativen Aufruf-Informationen den wenigstens einen Zwischen-Aufruf-Schwellwert erfüllen, Umschalten einer Zustandsmaschine, die dem Ziel-Smart Contract entspricht, in einen entsprechenden Zwischen-Aufruf-Zustand; und
als Reaktion darauf, dass die aktualisierten kumulativen Aufruf-Informationen den endgültigen Aufruf-Schwellwert erfüllen, Umschalten der Zustandsmaschine in einen endgültigen Aufruf-Zustand, wobei der endgültige Aufruf-Zustand dazu eingerichtet ist, den Blockchain-Knoten anzuweisen, den Contract-Code auszuführen.

10. Elektronische Vorrichtung, umfassend:
einen Prozessor; und
einen Speicher, der ausführbare Befehle des Prozessors speichert; und
wobei der Prozessor das Verfahren nach einem der Ansprüche 1 bis 9 durch Ausführen der ausführbaren Befehle implementiert.

## Revendications

1. Procédé d'invocation d'un contrat intelligent de calcul de sécurité multipartite, appliqué dans un noeud de chaîne de blocs, le procédé comprenant :
l'obtention séparée (302) d'une pluralité de transactions de chaîne de blocs, la pluralité de transactions de chaîne de blocs comprenant chacune des informations d'opération d'invocation pour invoquer un contrat intelligent cible, dans lequel les transactions de chaîne de blocs obtenues séparément sont soumises par une pluralité d'invocateurs de contrat dans une période de génération de bloc actuelle ;
la détermination (304) si les informations d'opération d'invocation de la pluralité obtenue de transactions de chaîne de blocs satisfont un seuil d'invocation pour le contrat intelligent cible, dans lequel les informations d'opération d'invocation comprennent des données de paramètre d'entrée incluses dans la pluralité obtenue de transactions de chaîne de blocs, et une séquence d'invocation du contrat intelligent cible par la pluralité obtenue de transactions de chaîne de blocs ; la détermination (304) comprenant la détermination si les données de paramètre d'entrée incluses dans la pluralité obtenue de transactions de chaîne de blocs satisfont une condition de paramètre d'entrée définie dans le seuil d'invocation et si la séquence d'invocation du contrat intelligent cible par la pluralité obtenue de transactions de chaîne de blocs satisfait une condition de séquence d'invocation parmi des invocateurs de contrat de la pluralité obtenue de transactions de chaîne de blocs définies dans le seuil d'invocation ; et
en réponse au fait que les informations d'opération d'invocation de la pluralité obtenue de transactions de chaîne de blocs satisfont le seuil d'invocation, l'exécution (306) d'un code de contrat correspondant au contrat intelligent cible, dans lequel l'exécution (306) du code de contrat correspondant au contrat intelligent cible est seulement déclenchée conjointement en réponse au fait que la pluralité obtenue de transactions de chaîne de blocs est obtenue dans la période de génération de bloc actuelle.

2. Procédé selon la revendication 1, dans lequel :
les informations d'opération d'invocation comprennent des informations d'identité d'un invocateur de contrat soumettant une transaction de chaîne de blocs de la pluralité de transactions de chaîne de blocs ; et
la détermination si les informations d'opération d'invocation de la pluralité obtenue de transactions de chaîne de blocs satisfont le seuil d'invocation pour le contrat intelligent cible comprend :
la détermination si les informations d'identité satisfont une condition d'identité pour l'invocateur de contrat incluse dans le seuil d'invocation.

3. Procédé selon la revendication 1, dans lequel :
les informations d'opération d'invocation comprennent une quantité de transaction de la pluralité obtenue de transactions de chaîne de blocs ; et
la détermination si les informations d'opération d'invocation de la pluralité obtenue de transactions de chaîne de blocs satisfont le seuil d'invocation pour le contrat intelligent cible comprend :
la détermination si la quantité de transaction satisfait une condition de quantité d'invocation pour un invocateur de contrat de la pluralité obtenue de transactions de chaîne de blocs définies incluses dans le seuil d'invocation.

4. Procédé selon la revendication 1, dans lequel le seuil d'invocation comprend un seuil d'invocation final et au moins un seuil d'invocation intermédiaire ; et
le procédé comprend en outre :
en réponse au fait que les informations d'opération d'invocation de la pluralité obtenue de transactions de chaîne de blocs satisfont un seuil d'invocation intermédiaire de l'au moins un seuil d'invocation intermédiaire, la commutation d'une machine d'état correspondant au contrat intelligent cible à un état d'invocation intermédiaire correspondant ; et
en réponse au fait que les informations d'opération d'invocation satisfont le seuil d'invocation final, la commutation de la machine d'état à un état d'invocation final, l'état d'invocation final étant configuré pour ordonner au noeud de chaîne de blocs d'exécuter le code de contrat.

5. Procédé selon la revendication 1, dans lequel :
l'obtention séparée d'une pluralité de transactions de chaîne de blocs comprend
la détermination d'informations d'opération d'invocation d'une transaction de chaîne de blocs actuellement reçue pour invoquer le contrat intelligent cible, et la mise à jour d'informations d'invocation cumulatives pour le contrat intelligent cible en fonction des informations d'opération d'invocation de la transaction de chaîne de blocs actuellement reçue ;
en réponse au fait que les informations d'invocation cumulatives mises à jour satisfont au moins un seuil d'invocation intermédiaire pour le contrat intelligent cible, la poursuite de l'obtention d'une transaction de chaîne de blocs subséquente pour invoquer le contrat intelligent cible ; et
dans lequel les informations d'opération d'invocation satisfaisant le seuil d'invocation comprennent les informations d'invocation cumulatives mises à jour satisfaisant un seuil d'invocation final pour le contrat intelligent cible.

6. Procédé selon la revendication 5, comprenant en outre :
la détermination si la transaction de chaîne de blocs actuellement reçue pour invoquer le contrat intelligent cible et une transaction de chaîne de blocs précédente pour invoquer le contrat intelligent cible sont dans une même période de génération de bloc, et si les informations d'invocation cumulatives mises à jour en fonction des informations d'opération d'invocation de la transaction de chaîne de blocs précédente satisfont un seuil d'invocation intermédiaire de l'au moins un seuil d'invocation intermédiaire ; et
en réponse au fait que la transaction de chaîne de blocs actuellement reçue pour invoquer le contrat intelligent cible et la transaction de chaîne de blocs précédente pour invoquer le contrat intelligent cible sont dans la même période de génération de bloc, et les informations d'invocation cumulatives mises à jour en fonction des informations d'opération d'invocation de la transaction de chaîne de blocs précédente satisfont un seuil d'invocation intermédiaire de l'au moins un seuil d'invocation intermédiaire, la détermination des informations d'opération d'invocation de la transaction de chaîne de blocs actuellement reçue.

7. Procédé selon la revendication 5, dans lequel :
les informations d'invocation cumulatives comprennent des données de paramètre d'entrée cumulatives ; et
le procédé comprend en outre :
la détermination si des données de paramètre d'entrée cumulatives mises à jour satisfont une condition de paramètre d'entrée incluse dans le seuil d'invocation final ou dans un seuil d'invocation intermédiaire de l'au moins un seuil d'invocation intermédiaire.

8. Procédé selon la revendication 5, dans lequel :
les informations d'opération d'invocation comprennent des informations d'identité d'un invocateur de contrat soumettant la transaction de chaîne de blocs actuelle, et les informations d'invocation cumulatives comprennent des informations d'identité cumulatives ; et
le procédé comprend en outre :
la détermination si des informations d'identité cumulatives mises à jour satisfont une condition d'identité pour l'invocateur de contrat incluse dans le seuil d'invocation final ou dans un seuil d'invocation intermédiaire de l'au moins un seuil d'invocation intermédiaire.

9. Procédé selon la revendication 5, comprenant en outre :
en réponse au fait que les informations d'invocation cumulatives mises à jour satisfont l'au moins un seuil d'invocation intermédiaire, la commutation d'une machine d'état correspondant au contrat intelligent cible à un état d'invocation intermédiaire correspondant ; et
en réponse au fait que les informations d'invocation cumulatives mises à jour satisfont le seuil d'invocation final, la commutation de la machine d'état à un état d'invocation final, l'état d'invocation final étant configuré pour ordonner au noeud de chaîne de blocs d'exécuter le code de contrat.

10. Dispositif électronique, comprenant :
un processeur ; et
une mémoire stockant des instructions exécutables du processeur ; et
le processeur mettant en oeuvre le procédé selon l'une quelconque des revendications 1 à 9 en exécutant les instructions exécutables.
